# EUROPÄISCHE PATENTSCHRIFT

(11) **EP 0 895 502 B1**
(45) Veröffentlichungstag und Bekanntmachung des Hinweises auf die Patenterteilung: **19.06.2002**
(21) Anmeldenummer: 97921780.9
(22) Anmeldetag: 25.04.1997
(51) Int. Cl.: B60T 13/66, B60T 8/32, B60T 13/14

(54) **ELEKTROHYDRAULISCHE BREMSANLAGE**
ELECTRO-HYDRAULIC BRAKE SYSTEM
SYSTEME DE FREINAGE ELECTRO-HYDRAULIQUE

(30) Priorität: 25.04.1996 DE 19616538
(43) Veröffentlichungstag der Anmeldung: 10.02.1999
(73) Patentinhaber: Lucas Industries Limited, West Midlands B90 4LA (GB)
(72) Erfinder: POERTZGEN, Gregor, D-56068 Koblenz (DE); WÖRNSDORFER, Karl-Friedrich, D-55257 Budenheim (DE); MOHR, Kurt, D-56283 Halsenbach (DE)
(74) Vertreter: Schmidt, Steffen J., Dipl.-Ing.
(86) Internationale Anmeldenummer: EP9702150
(87) Internationale Veröffentlichungsnummer: WO9741016

(56) Entgegenhaltungen:
- EP-A- 0 348 270
- WO-A-93/00236
- WO-A-96/11129
- DE-A- 3 408 872
- DE-A- 4 201 732

## Beschreibung

Die Erfindung betrifft eine elektrohydraulische Bremsanlage für Kraftfahrzeuge, mit einem durch ein Bremspedal betätigbaren Bremszylinder und einem drucklosen Reservoir für Hydraulikfluid, einer mit wenigstens einem Fahrzeugrad gekoppelten Bremseinrichtung, die mit dem Bremszylinder in Verbindung bringbar ist, um die Bremseinrichtung mit unter Druck stehendem Hydraulikfluid zu beaufschlagen ("Push-Through"), einer Hydraulikpumpe und einem von dieser gespeisten Hydraulikdruckspeicher zur Bereitstellung von unter Druck stehendem Hydraulikfluid, das der Bremseinrichtung durch eine Steuerventilanordnung gesteuert zuführbar ist, um die Bremseinrichtung mit unter Druck stehendem Hydraulikfluid zu beaufschlagen ("Brake-by-Wire).

Bei einer solchen elektrohydraulischen Bremsanlage wird die zur Abbremsung des Kraftfahrzeugs erforderliche Bremsenergie durch ein elektrisch betätigtes Bremssystem bereitgestellt. Um das Fahrzeug bei einem unerwarteten Ausfall des elektrisch betätigten Bremssystems mit einer Mindestverzögerung abzubremsen, weist die Bremsanlage zusätzlich ein hydraulisches Hilfsbremssystem zur unmittelbaren Betätigung der Bremsen auf.

Das Anwendungsgebiet einer solchen elektrohydraulischen Brems-anlage umfaßt Antiblockierregelung, Antischlupfregelung, elektronische Bremskraftverteilung sowie fahrdynamische Regelungen.

Da bei einer elektrisch betätigten Bremsanlage der Fahrerwunsch am Bremspedal mit Sensoren erfaßt und in Form von elektrischen Signalen der elektronischen Steuerung zugeführt wird, werden derartige Systeme auch als "Brake-by-Wire"-Systeme bezeichnet. Für das redundante hydraulische Notsystem ist in herkömmlicher Weise über einen Bremsdruckgeber sowie Hydraulikleitungen eine direkte Verbindung zwischen Bremspedal und den Bremsen herzustellen, was auch die Bezeichnung "Push-Through" trägt. Dies erfordert eine Umschalteinrichtung, so daß bei normalem Betrieb der in dem elektrischen System erzeugte Bremsdruck, und bei Vorliegen eines Fehlers oder Ausfall des elektrischen Systems der in dem hydraulischen Hilfssystem erzeugte Bremsdruck an die Bremsen übertragen wird.

Üblicherweise ist die Steuerventilanordnung als Schieberventil ausgestaltet, so daß Undichtigkeiten und Leckagen unumgänglich sind. Damit ist ein Druckabfall des in dem Hydraulikdruckspeicher aufgenommenen Hydraulikfluids insbesondere bei längeren Stillstandszeiten des Fahrzeuges nicht zu vermeiden. Außerdem stehen bei dieser bekannten Anlage die dem Hydraulikdruckspeicher nachgeordneten Bauelemente (Leitungen, Dichtungen, Verbindungen etc.) permanent unter dem in dem Hydraulikdruckspeicher vorhandenen Druck. Dies kann zu vorzeitiger Materialermüdung, zu Undichtigkeiten und dergl. führen.

Aus der WO96/11129 ist eine elektrohydraulische Bremsanlage für Kraftfahrzeuge bekannt. Die Bremsanlage umfasst einen durch ein Bremspedal betätigbaren Bremszylinder, ein druckloses Reservoir für Hydraulikfluid, mehrere mit jeweils einem Fahrzeugrad gekoppelte Bremseinrichtungen sowie eine Hydraulikpumpe. Die Eingangsseite der Hydraulikpumpe ist mit dem drucklosen Reservoir in ständiger Verbindung. Die Hydraulikpumpe speist eine Hydraulikdruckspeicher zur Bereitstellung von unter Druck stehendem Hydraulikfluid, das der Bremseinrichtung zuführbar ist, um die Bremseinrichtung mit unter Druck stehendem Hydraulikfluid zu beaufschlagen.

Die DE 42 01 732 A1 betrifft eine hydraulische Bremsdrucksteuervorrichtung zum Steuern des Antriebsschlupfes von angetriebenen Rädern. Die Vorrichtung umfasst einen Speicher, welcher über ein Sperrventil an eine Druckleitung anschließt. Das Sperrventil wird dann geöffnet, wenn ein Bremsvorgang während einer Antriebsschlupfregelung eingeleitet wird und aus dem Bremsvorgang heraus eine Bremsschlupfregelung einsetzt. Der Speicher dient dazu, eine Druckmittelmenge aufzunehmen, damit das während der Antriebsschlupfregelung in den Bremskreis eingebrachte Druckmittel nicht unter Beschädigung der Hauptzylindermanschetten in einen Vorratsbehälter zurückgelangt.

Aus der DE 34 08 872 A1 ist eine hydraulische Bremsanlage für Kraftfahrzeuge bekannt. Die Bremsanlage umfasst einen Druckmittelpumpenantrieb, welcher einerseits mittels eines Druckkontakts eines Druckspeichers und andererseits durch einen Bremspedalkontakt einschaltbar ist. Zwischen der Druckmittelpumpe und dem Druckspeicher ist u.a. ein Absperrventil angeschlossen, welches normalerweise gesperrt und durch den Bremspedalkontakt in eine geöffnete Stellung schaltbar ist.

Der Erfindung liegt die Aufgabe zugrunde unter Vermeidung der eingangs geschilderten Nachteile eine "Push-Through"-fähige elektrohydraulische Bremsanlage zu entwickeln, die hohen Sicherheitsanforderungen gerecht wird.

Zur Lösung dieser Aufgabe ist bei der eingangs genannten Bremsanlage zwischen der Hydraulikpumpe und dem Hydraulikdruckspeicher ein Absperrventil angeordnet, um eine Verbindung zwischen und der Hydraulikpumpe und dem Hydraulikdruckspeicher herzustellen oder zu unterbinden. Zwischen dem Hydraulikdruckspeicher und dem Absperrventil ist ein erster Sensor zur Erfassung des Hydraulikdrucks angeordnet.

Überraschenderweise lassen sich durch diese Maßnahmen die folgenden Vorteile erzielen:

Da die Steuerventilanordnungen vorzugsweise als Schieberventile ausgeführt werden, die eine bauartbedingte Leckage ausweisen, wird durch das Vorhandensein des Absperrventils ein Entweichen des im Hydraulikdruckspeicher gespeicherten Bremsfluids bzw. ein Abfallen des Arbeitsdruckes im Hydraulikdruckspeicher verhindert. Dies ist insbesondere dann von Bedeutung, wenn das Fahrzeug über einen längeren Zeitraum stillsteht.

Fehlerbedingte Leckagen (Leitungsrisse, defekte Dichtsitze, etc) werden ebenfalls vermieden.

Bei einer bevorzugten Ausführungsform der Erfindung ist das Absperrventil als elektromagnetisch betätigbares Sitzventil ausgestaltet ist. Sitzventile sind prinzipbedingt leckagefrei, so daß sich der der Erfindung zugrunde liegende Gedanke besonders einfach realisieren läßt.

Vorzugsweise ist bei der erfindungsgemäßen elektrohydraulischen Bremsanlage für Kraftfahrzeuge eine elektronischen Steuereinrichtung (ECU) vorgesehen, die mit einem zweiten Sensor zur Erfassung von in der Bremsanlage und insbesondere an dem Bremspedal auftretenden statischen und dynamischen Zuständen verbunden ist und von dem zweiten Sensor abgegebene Signale zur Erzeugung von Steuersignalen für das Absperrventil heranzieht.

Des weiteren kann bei der erfindungsgemäßen elektrohydraulischen Bremsanlage für Kraftfahrzeuge der Hydraulikdruckspeicher als Gasdruckspeicher ausgestaltet sein und die elektronische Steuereinrichtung dazu eingerichtet sein, in Abhängigkeit von einem Signal des ersten Sensors die Hydraulikpumpe zu betätigen um den Hydraulikdruckspeicher zu laden.

Der ideale Arbeitdruck des Hydraulikdruckspeichers liegt in der Größenordnung zwischen 130 bar und 160 bar. Wenn als Hydraulikdruckspeicher ein Gasdruckspeicher zum Einsatz kommt, ist der Gasfülldruck von der Gastemperatur bzw. der Umgebungstemperatur abhängig. Dies bedeutet, daß, wenn der Gasdruckspeicher bei einer Temperatur von 20°C auf einen Gasfülldruck von 90 bar vorgeladen ist, und die Temperatur auf - 40°C absinkt, der Gasfülldruck auf 16 bar abfällt.

Der Druck im Hydraulikdruckspeicher wird durch den ersten Sensor überwacht. Fällt der Druck auf einen Wert unterhalb von Pmin, z.B. 110 bar, ab, so wird das Absperrventil geöffnet und die Hydraulikpumpe in Betrieb genommen, um den Druckspeicher nachzuladen. Wird während des Nachladevorganges eine Bremsenbetätigung erforderlich, so besteht durch das Absperrventil die Möglichkeit, den Hydraulikdruckspeicher abzusperren, so daß die Befüllung der Radbremsen mit Bremsfluid unmittelbar durch die Hydraulikpumpe erfolgen kann. Da der Hydraulikdruckspeicher abgesperrt ist, fördert die Pumpe während der Bremsenbetätigung kein Bremsfluid in den Hydraulikdruckspeicher, so daß ein schnellerer Druckaufbau in den Radbremsen erfolgen kann.

Weiterhin kann die elektronische Steuereinrichtung (ECU) dazu eingerichtet sein, in Abhängigkeit von einem eine Betätigung des Bremspedals wiedergebenden Signal wenigstens des zweiten Sensors sowie eines einen unter einem vorbestimmten Hydraulikdruckes in dem Hydraulikdruckspeicher wiedergebendes Signal wenigstens des ersten Sensors das Absperrventil im Sinne eines Unterbindens der Verbindung zwischen der Hydraulikpumpe und dem Hydraulikdruckspeicher zu betätigen.

Außerdem kann die elektronische Steuereinrichtung (ECU) dazu eingerichtet sein, das Absperrventil im Sinne eines Unterbindens der Verbindung zwischen der Hydraulikpumpe und dem Hydraulikdruckspeicher zu betätigen und die Hydraulikpumpe so mit Ansteuersignalen zu beaufschlagen, daß die Hydraulikpumpe ein vorherbestimmtes Druckprofil erzeugt, das durch in der Bremsanlage vorhandene Sensoren erfaßt und in Form von entsprechenden Sensorsignalen an die elektronische Steuereinrichtung (ECU) geleitet wird, zum Vergleich zwischen dem vorherbestimmten Druckprofil und dem durch die Sensoren erfaßten Druckverlauf.

Bei abgesperrtem Druckspeicher kann eine Überwachung der Drucksensoren erfolgen, indem über die Pumpe ein bestimmter Druckverlauf eingestellt wird, der mit dem mittels der Drucksensoren erfaßten Druckverlauf verglichen wird.

Schließlich kann bei der erfindungsgemäßen elektrohydraulische Bremsanlage für Kraftfahrzeuge die elektronische Steuereinrichtung (ECU) dazu eingerichtet sein, das Absperrventil im Sinne eines Unterbindens der Verbindung zwischen der Hydraulikpumpe und dem Hydraulikdruckspeicher zu betätigen und die Hydraulikpumpe so mit Ansteuersignalen zu beaufschlagen, daß die Hydraulikpumpe einen über dem maximalem Arbeitsdruck des Hydraulikdruckspeichers liegenden Hydraulikdruck erzeugt.

Ist ein Druckaufbau oberhalb des maximalen Arbeitsdrucks des Druckspeichers erforderlich, so kann dies bei abgesperrtem Druckspeicher durch die Pumpe ebenfalls innerhalb einer kürzeren Zeitspanne erfolgen.

Es kann auch ein Druckspeicher mit geringerem Volumen eingesetzt werden, wodurch sich Einbauraum einsparen läßt, da durch eine entsprechende Hydraulikpumpe die gewünschten Druckverläufe erzielt werden können.

Die Erfindung betrifft also auch die Betriebsweise der elektonischen Steuereinrichtung (ECU), die sich im Zusammenhang mit der erfindungsgemäßen Absperr-Ventilanordnung ergibt.

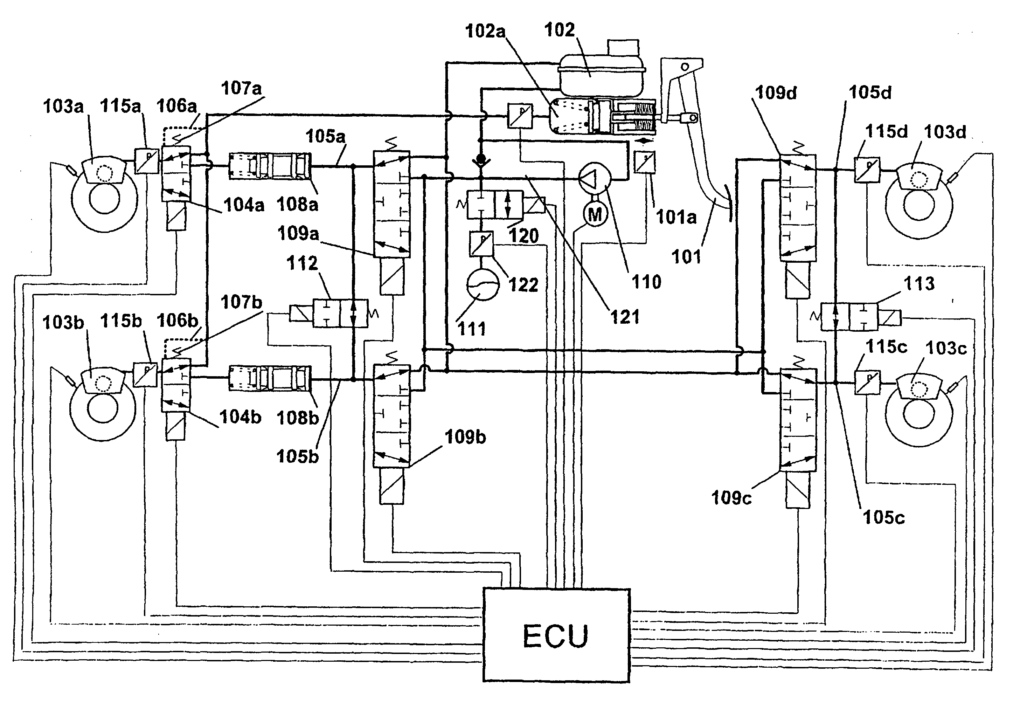

Die Erfindung und deren Vorteile werden im folgenden anhand der beigefügten Zeichnung näher erläutert, die in einer schematischen Prinzipschaltung eine Ausführungsform einer erfindungsgemäßen "Push-Through"-fähigen "Brake-by-Wire" Bremsanlage zeigt.

Die in der Zeichnung dargestellte Bremsanlage weist zur Notbetätigung einen "Push-Through" Bremskreis 100 auf, der von einem über das Bremspedal 101 betätigbaren Bremszylinder 102 gespeist wird. Das Bremspedal 101 weist einen Sensor 101a zur Erfassung des Fahrerwunsches auf. Der Sensor 101a gibt beispielsweise ein aus der Betätigung abgeleitetes elektrisches Weg- und/oder Kraftsignal ab. Der Fahrerwunsch wird zu einer elektronischen Steuereinheit ECU übertragen, dort ausgewertet und zur Erzeugung elektrischer Steuersignale zur Ansteuerung von weiter unten näher beschriebener Ventile und einer Hydraulikpumpe 110 herangezogen. Zwischen dem "Push-Through" Bremskreis 100 und den Radbremsen einer Fahrzeugachse 103a, 103b sind Umschaltventile 104a, 104b angeordnet, um die Radbremsen 103a, 103b entweder durch den "Push-Through" Bremskreis 100 oder durch die elektrisch gesteuerten Bremskanäle 105a, 105b ("Brake-by-Wire") mit Bremsfluid zu beaufschlagen.

Die Umschaltventile 104a, 104b verbinden im elektrisch unbetätigtem Zustand, also ihrer Vorzugsstellung, den "Push-Through" Bremskreis 100 mit den Radbremsen 103a, 103b, wobei die Verbindung zu den elektrisch gesteuerten Bremskanälen 105a, 10b gesperrt wird. Bei elektrischer Betätigung verbinden die Umschaltventile 104a, 104b die Radbremsen 103a, 103b jeweils mit den zugehörigen elektrisch gesteuerten Bremskanälen 105a, 105b, wobei jeweils die Verbindung zu dem "Push-Through" Bremskreis 100 gesperrt wird. Um die Sicherheit zu erhöhen, beispielsweise im Fall einer defekten Ventilrückstellfeder 107a, 107b, sind die Umschaltventile 104a, 104b jeweils auch über Drucksteuerleitungen 106a, 106b in die der "Push-Through" Betätigung entsprechende Vorzugsstellung bringbar.

Weiterhin sind in den elektrisch gesteuerten Bremskanälen 105a, 105b dem Umschaltventilen 104a, 104b jeweils sogenannte Trennzylinder 108a, 108b vorgeschaltet. Durch diese Trennzylinder 108a, 108b wird eine hydraulische Entkopplung zwischen dem "Push-Through" Bremskreis 100 und den elektrisch gesteuerten Bremskanälen 105a, 105b sichergestellt.

Die Bremsdruckmodulation in den elektrisch gesteuerten Bremskanälen 105a, 105b sowie den elektrisch gesteuerten Bremskanälen 105c, 105d, die den Radbremsen der anderen Fahrzeugachse 103c, 103d zugeordnet sind, erfolgt in bekannter Weise über Steuerventile 109a, 109b, 109c, 109d, wobei der Bremsdruck von aus einer elektromotorisch betriebenen Pumpe 110 und einem Druckspeicher 111 bestehenden Einheit bereitgestellt wird.

Zwischen den elektrisch gesteuerten Bremskanälen einer Fahrzeugachse 105a, 105b bzw. 105c, 105d sind Absperrventile 112 bzw. 113 angeordnet. Diese Absperrventile 112 bzw. 113 verbinden in unbestätigtem Zustand die Bremskanäle 105a, 105b bzw. 105c, 105d miteinander, wogegen die Bremskanäle 105a, 105b bzw. 105c, 105d im betätigten Zustand gegeneinander gesperrt sind. Dadurch besteht die Möglichkeit die Bremskanäle einer Fahrzeugachse 105a, 105b bzw. 105c, 105d hydraulisch zu koppeln. Durch die Kopplung können Unterschiede im Regelverhalten zwischen den Bremskanälen einer Fahrzeugachse 105a, 105b bzw. 105c, 105d kompensiert werden, die beispielsweise durch fertigungstechnisch bedingte Toleranzen entstehen können. Dies ist insbesondere bei einer Normalbremsung von Vorteil, da sich wie bei einer konventionellen Bremsanlage in den Radbremsen einer Fahrzeugbremse 103a, 103b bzw. 103c, 103d jeweils das gleiche Druckniveau einstellt, so daß die Stabilität des Fahrzeugs gewährleistet ist. Ist dagegen eine individuelle Regelung des Bremsdrucks in den Radbremsen 103a, 103b bzw. 103c, 103d erforderlich, was unter anderem bei einer Antiblockierregelung, Antischlupfregelung oder Fahrdynamikregelung der Fall ist, so wird die hydraulische Kopplung der Bremskanäle 105a, 105b bzw. 105c, 105d durch Betätigung des Absperrventils 112 bzw. 113 aufgehoben.

Zwischen der Hydraulikpumpe 110 und dem Hydraulikdruckspeicher 111 ist das einen wesentlichen Aspekt der Erfindung bildende Absperrventil 120 angeordnet, das als Sitzventil ausgestaltet ist. Durch dieses Absperrventil 120 ist es möglich, die Leckageprobleme an den Schieberventilen 109a bis 109d zu umgehen. Außerdem kann die Motorpumpeneinheit zur Druckmoulation (anstelle des Druckspeichers 111 oder zu dessen Unterstützung) herangezogen werden. Um einen schnelleren Druckaufbau insbesondere oberhalb des Arbeitsdrucks der Hydraulikdruckkammer 111 zu erreichen, kann die Hydraulikdruckkammer 111 von dem übrigen Bremssystem durch das Absperrventil 120 getrennt werden. Damit ist ein dynamischerer Druckaufbau möglich.

Der Druck im Druckspeicher 111 wird durch einen Sensor 122 überwacht. Fällt der Druck auf einen Wert unterhalb von, z.B. 110 bar, ab, so wird das Absperrventil 120 geöffnet und die Pumpe 121 in Betrieb genommen, um den Druckspeicher nachzuladen. Wird während des Nachladevorganges eine Bremsenbeättigung erforderlich, so besteht durch das Absperrventil 120 die Möglichkeit, den Druckspeicher 111 abzusperren, so daß die Befüllung der Radbremsen 103a, 103b, 103c, 103d mit Bremsfluid unmittelbar durch die Pumpe 110 erfolgen kann. Wenn der Druckspeicher 111 abgesperrt wird, fördert die Pumpe während der Bremsenbetätigung kein Bremsfluid in den Druckspeicher 111, so daß ein schnellerer Druckaufbau in den Radbremsen 103a, 103b, 103c, 103d erfolgen kann.

Ist ein Druckaufbau oberhalb des maximalen Arbeitsdrucks des Druckspeichers 111 erforderlich, so kann dies bei abgesperrtem Druckspeicher 111 durch die Pumpe 120 innerhalb einer kürzeren Zeitspanne erfolgen.

Bei abgesperrtem Druckspeicher 111 kann eine Überwachung der Drucksensoren 115a, 115b, 115c, 115d erfolgen, indem über die Pumpe 110 ein bestimmter Druckverlauf eingestellt wird, der mit dem mittels der Drucksensoren 115a, 115b, 115c, 115d erfaßten Druckverlauf verglichen wird.

## Patentansprüche

1. Elektrohydraulische Bremsanlage für Kraftfahrzeuge, mit
- einem durch ein Bremspedal (101) betätigbaren Bremszylinder (102) und einem drucklosen Reservoir (102a) für Hydraulikfluid,
- einer mit wenigstens einem Fahrzeugrad gekoppelten Bremseinrichtung (103a ... 103d), die mit dem Bremszylinder (102) in Verbindung bringbar ist, um die Bremseinrichtung (103a ... 103b) mit unter Druck stehendem Hydraulikfluid zu beaufschlagen,
- einer Hydraulikpumpe (110), deren Eingangsseite mit dem drucklosen Reservoir (102a) in ständiger Verbindung steht, und einem von dieser gespeisten Hydraulikdruckspeicher (111) zur Bereitstellung von unter Druck stehendem Hydraulikfluid, das der Bremseinrichtung (103a ... 103b) durch eine Steuerventilanordnung (109a ... 109d) gesteuert zuführbar ist, um die Bremseinrichtung (103a ... 109d) mit unter Druck stehendem Hydraulikfluid zu beaufschlagen,
**dadurch gekennzeichnet, dass**
- in einer Verbindung zwischen der Ausgangsseite der Hydraulikpumpe (110) und dem Hydraulikdruckspeicher (111) ein Absperrventil (120) angeordnet ist, um die Verbindung zwischen der Ausgangsseite der Hydraulikpumpe (110) und dem Hydraulikdruckspeicher (111) herzustellen oder zu unterbinden, und dass
- zwischen dem Hydraulikdruckspeicher (111) und dem Absperrventil (120) ein erster Sensor (122) zur Erfassung des Hydraulikdrucks angeordnet ist.

2. Elektrohydraulische Bremsanlage für Kraftfahrzeuge nach Anspruch 1, wobei das Absperrventil (122) als elektromagnetisch betätigbares Sitzventil ausgestaltet ist.

3. Elektrohydraulische Bremsanlage für Kraftfahrzeuge nach einem der Ansprüche 1 oder 2, mit
- einer elektronischen Steuereinrichtung (ECU), die mit einem zweiten Sensor (101a) zur Erfassung von in der Bremsanlage und insbesondere an dem Bremspedal (101) auftretenden statischen und dynamischen Zuständen verbunden ist und von dem zweiten Sensor (101a) abgegebene Signale zur Erzeugung von Steuersignalen für das Absperrventil (120) heranzieht.

4. Elektrohydraulische Bremsanlage für Kraftfahrzeuge nach einem der Ansprüche 1 bis 3, wobei der Hydraulikdruckspeicher als Gasdruckspeicher (111) ausgestaltet ist und die elektronische Steuereinrichtung (ECU) dazu eingerichtet ist, in Abhängigkeit von einem Signal des ersten Sensors (122) die Hydraulikpumpe (110) zu betätigen um den Hydraulikdruckspeicher (111) zu laden.

5. Elektrohydraulische Bremsanlage für Kraftfahrzeuge nach einem der Ansprüche 1 bis 4, wobei die elektronische Steuereinrichtung (ECU) dazu eingerichtet ist, in Abhängigkeit von einem eine Betätigung des Bremspedals (101) wiedergebendes Signal wenigstens des zweiten Sensors (101a) sowie eines einen unter einem vorbestimmten Hydraulikdruckes in dem Hydraulikdruckspeicher (111) wiedergebendes Signal wenigstens des ersten Sensors (122) das Absperrventil (120) im Sinne eines Unterbindens der Verbindung zwischen der Hydraulikpumpe (110) und dem Hydraulikdruckspeicher (111) zu betätigen.

6. Elektrohydraulische Bremsanlage für Kraftfahrzeuge nach einem der Ansprüche 1 bis 5, wobei die elektronische Steuereinrichtung (ECU) dazu eingerichtet ist, das Absperrventil (120) im Sinne eines Unterbindens der Verbindung zwischen der Hydraulikpumpe (110) und dem Hydraulikdruckspeicher (111) zu betätigen und die Hydraulikpumpe (110) so mit Ansteuersignalen zu beaufschlagen, daß die Hydraulikpumpe (110) ein vorherbestimmtes Druckprofil erzeugt, das durch in der Bremsanlage vorhandene Sensoren (115a ... 115d; 122) erfaßt und in Form von entsprechenden Sensorsignalen an die elektronische Steuereinrichtung (ECU) geleitet wird, zum Vergleich zwischen dem vorherbestimmten Druckprofil und dem durch die Sensoren erfaßten Druckverlauf.

7. Elektrohydraulische Bremsanlage für Kraftfahrzeuge nach einem der Ansprüche 1 bis 6, wobei die elektronische Steuereinrichtung (ECU) dazu eingerichtet ist, das Absperrventil (120) im Sinne eines Unterbindens der Verbindung zwischen der Hydraulikpumpe (110) und dem Hydraulikdruckspeicher (111) zu betätigen und die Hydraulikpumpe (110) so mit Ansteuersignalen zu beaufschlagen, daß die Hydraulikpumpe (110) einen vorzugsweise über dem maximalem Arbeitsdruck des Hydraulikdruckspeichers (111) liegenden Hydraulikdruck erzeugt.

## Claims

1. An electrohydraulic braking system for motor vehicles, comprising
- a brake cylinder (102) adapted to be actuated by a brake pedal (101) and a pressureless reservoir (102a) for hydraulic fluid;
- a brake means (103a, ..., 103d) which is coupled with at least one vehicle wheel and can be connected with the brake cylinder (102) in order to subject the brake means (103a, ..., 103d) to pressurized hydraulic fluid;
- a hydraulic pump (110) the input side of which is permanently connected with the unpressurized reservoir (102a) and a hydraulic pressure accumulator (111) fed by same for providing pressurized hydraulic fluid which can be supplied to the brake means (103a, ..., 103d) by a control valve arrangement (109a, ..., 109d) in a controlled manner in order to supply the brake means (103a, ..., 103d) with pressurized hydraulic fluid, **characterized in that**
- a shut-off valve (120) is arranged in a connection between the output side of the hydraulic pump (110) and the hydraulic pressure accumulator (111) in order to make or shut off a connection between the output side of the hydraulic pump (110) and the hydraulic pressure accumulator (111), and that
- a first sensor (122) for sensing the hydraulic pressure is arranged between the hydraulic pressure accumulator (111) and the shut-off valve (120).

2. The electrohydraulic braking system for motor vehicles according to Claim 1, wherein said shut-off valve (122) is designed as a seat valve which can be operated electromagnetically.

3. The electrohydraulic braking system for motor vehicles according to one of Claims 1 or 2, comprising
- an electronic control unit (ECU) which is connected with a second sensor (101a) for detecting the static and dynamic conditions occurring in the braking system and in particular at the brake pedal (101), and which utilizes signals output by the second sensor (101a) for generating control signals for the shut-off valve (120).

4. The electrohydraulic braking system for motor vehicles according to one of Claims 1 to 3, wherein the hydraulic pressure accumulator is designed as a gas pressure accumulator (111) and the electronic control unit (ECU) is adapted to operate the hydraulic pump (110) in response to a signal from a second sensor (122) in order to charge the hydraulic pressure accumulator (111).

5. The electrohydraulic braking system for motor vehicles according to one of Claims 1 to 4, wherein the electronic control unit (ECU) is adapted to operate the shut-off valve (120) in the sense of an interruption of the connection between the hydraulic pump (110) and the hydraulic pressure accumulator (111) in response to a signal of at least the first sensor (101a), which represents an actuation of the brake pedal (101), as well as a signal of at least the first sensor (122), which represents a below a predetermined hydraulic pressure in the hydraulic pressure accumulator (111).

6. The electrohydraulic braking system for motor vehicles according to one of Claims 1 to 5, wherein the electronic control unit (ECU) is adapted to operate the shut-off valve (120) in the sense of an interruption of the connection between the hydraulic pump (110) and the hydraulic pressure accumulator (111) and to supply the hydraulic pump (110) with control signals in such a manner that the hydraulic pump (110) generates a predetermined pressure profile which is detected by sensors (115a, ..., 115d; 122) provided in the braking system and supplied to the electronic control unit (ECU) in the form of corresponding sensor signals for a comparison between the predetermined pressure profile and the pressure characteristic detected by the sensors.

7. The electrohydraulic braking system for motor vehicles according to one of Claims 1 to 6, wherein the electronic control unit (ECU) is adapted to operate the shut-off valve (120) in the sense of an interruption of the connection between the hydraulic pump (110) and the hydraulic pressure accumulator (111) and to supply the hydraulic pump (110) with control signals in such a manner that the hydraulic pump (110) generates a hydraulic pressure which preferably exceeds the maximum operating pressure of the hydraulic pressure accumulator (111).

## Revendications

1. Système de freinage électro-hydraulique pour véhicules automobiles, comprenant
- un cylindre de frein (102) pouvant être actionné par une pédale de frein (101) et un réservoir de fluide de hydraulique sans pression (102a),
- un système de freinage (103a ... 103d) couplé à au moins une roue de véhicule qui peut être mis en communication avec le cylindre de frein (102) pour alimenter le système de freinage (103a ... 103b) en fluide de hydraulique sous pression,
- une pompe hydraulique (110) dont le côté d'entrée est en communication permanente avec le réservoir sans pression (102a) et un accumulateur de pression hydraulique (111) alimenté par celle-ci pour mettre à disposition du fluide hydraulique sous pression qui puisse être amené de façon commandée au système de freinage (103a ... 103b) par un dispositif de vanne de commande (109a ... 109d) pour alimenter en fluide hydraulique sous pression le système de freinage (103a ... 109d)
**caractérisé en ce que**
- une vanne d'arrêt (120) est disposée dans une liaison entre le côté de sortie de la pompe hydraulique (110) et l'accumulateur de pression hydraulique (111) pour permettre ou interrompre la communication entre le côté de sortie de la pompe hydraulique (110) et l'accumulateur de pression hydraulique (111) et **en ce que**
- un premier capteur (122) servant à relever la pression de hydraulique est disposé entre l'accumulateur de pression hydraulique (111) et la vanne d'arrêt (120).

2. Système de freinage électro-hydraulique pour véhicules automobiles selon la revendication 1, dans lequel la vanne d'arrêt (122) est une vanne à siège pouvant être actionnée de façon électromagnétique.

3. Système de freinage électro-hydraulique pour véhicules automobiles selon l'une quelconque des revendications 1 ou 2, comprenant
- un dispositif de commande électronique (ECU) qui est relié à un deuxième capteur (101a) pour le relevé d'états statiques et dynamiques apparaissant dans le système de freinage et en particulier à la pédale de frein (101) et qui utilise des signaux de commande délivrés par le deuxième capteur (101a) pour générer des signaux de commande destinés à la vanne d'arrêt (120).

4. Système de freinage électro-hydraulique pour véhicules automobiles selon l'une quelconque des revendications 1 à 3, dans lequel l'accumulateur de pression hydraulique est un réservoir de gaz sous pression (111) et le dispositif de commande électronique (ECU) est conçu pour, en fonction d'un signal provenant du premier capteur (122), actionner la pompe hydraulique (110) pour charger l'accumulateur de pression hydraulique (111).

5. Système de freinage électro-hydraulique pour véhicules automobiles selon l'une quelconque des revendications 1 à 4, dans lequel le dispositif de commande électronique (ECU) est conçu pour, en fonction d'un signal provenant au moins du deuxième capteur (101a) et indiquant un actionnement de la pédale de frein (101), ainsi que d'un signal provenant au moins du premier capteur (122) et indiquant une pression inférieure à une pression hydraulique prédéterminée dans l'accumulateur de pression hydraulique (111), actionner la vanne d'arrêt (120) dans le sens de l'interruption de la communication entre la pompe hydraulique (110) et l'accumulateur de pression hydraulique (111).

6. Système de freinage électro-hydraulique pour véhicules automobiles selon l'une quelconque des revendications 1 à 5, dans lequel le dispositif de commande électronique (ECU) est conçu pour actionner la vanne d'arrêt (120) dans le sens de l'interruption de la communication entre la pompe hydraulique (110) et l'accumulateur de pression hydraulique (111) et de transmettre à la pompe hydraulique (110) des signaux de commande de telle façon que la pompe hydraulique (110) produise un profil de pression fixé à l'avance qui soit relevé par les capteurs présents dans le système de freinage (115a ... 115d; 122) et soit transmis sous forme de signaux de capteurs correspondants au dispositif de commande électronique (ECU) pour la comparaison entre le profil de pression fixé à l'avance et les variations de pression relevées par les capteurs.

7. Système de freinage électro-hydraulique pour véhicules automobiles selon l'une quelconque des revendications 1 à 6, dans lequel le dispositif de commande électronique (ECU) est conçu pour actionner la vanne d'arrêt (120) dans le sens d'une interruption de la communication entre la pompe hydraulique (110) et l'accumulateur de pression hydraulique (111) et transmettre à la pompe hydraulique (110) des signaux de commande de telle façon que la pompe hydraulique (110) produise une pression hydraulique de préférence supérieure à la pression de travail maximale de l'accumulateur de pression hydraulique (111).
